# EUROPÄISCHE PATENTSCHRIFT

(11) **EP 1 547 353 B1**
(45) Veröffentlichungstag und Bekanntmachung des Hinweises auf die Patenterteilung: **03.05.2006**
(21) Anmeldenummer: 03798865.6
(22) Anmeldetag: 22.08.2003
(51) Int. Cl.: H04M 3/42

(54) **VERFAHREN ZUR BEREITSTELLUNG VON ABWESENHEITSINFORMATION**
METHOD FOR PROVIDING ABSENCE INFORMATION
PROCEDE POUR FOURNIR UNE INFORMATION CONCERNANT UNE ABSENCE

(30) Priorität: 30.09.2002 DE 10245642
(43) Veröffentlichungstag der Anmeldung: 29.06.2005
(73) Patentinhaber: SIEMENS AKTIENGESELLSCHAFT, 80333 München (DE)
(72) Erfinder: ACKERMANN-MARKES, Achim, 82237 Wörthsee (DE)
(86) Internationale Anmeldenummer: PCT/DE2003/002823
(87) Internationale Veröffentlichungsnummer: WO 2004/032467

(56) Entgegenhaltungen:
- EP-A- 1 217 849
- US-A1- 2002 078 150

## Beschreibung

Die Erfindung betrifft ein Verfahren zur Bereitstellung von Abwesenheitsinformation in einer Telekommunikationsanlage mit mehreren Teilnehmern.

Neben den gewohnten Telephonieleistungsmerkmalen gewinnen moderne Formen der Kommunikation, wie "Instant Messaging" und "Presence" zunehmend an Bedeutung. Gerade die junge Generation ist es heute schon gewohnt, mit diesen Kommunikationsformen zu arbeiten und es ist davon auszugehen, dass sie diese Kommunikationsformen auch in der Arbeitswelt nutzen werden wollen. Dies wird beispielsweise von einigen Firmen unterstützt, die mit den IP-Konvergenz Produkten den Weg in diese Welt beschreiten.

Bei TK-Anlagen erfährt ein Teilnehmer von der Abwesenheit eines anderen dadurch, dass bei einem versuchten Verbindungsaufbaus der andere Teilnehmer die Verbindung nicht entgegen nimmt und, falls ein Abwesenheitstext definiert wurde, dass der anrufende Teilnehmer diese Textmeldung erhält. Führt der angerufene Teilnehmer gerade ein Gespräch, so wird dem Anrufenden das über den Besetzten signalisiert.

Der Anrufer erhält diese Information jedoch nur in dem Fall, dass er anruft, also den Gesprächspartner anwählt. Sinn eines "Presence-Services" ist es, einem Teilnehmer unmittelbar Abwesenheitsinformation bzw. Information über die Verfügbarkeit anderer Teilnehmer zu geben, ohne diese direkt kontaktieren zu müssen. Diese Information kann z.B. sein: Bin anwesend, Bin im Urlaub, Bitte nicht stören, Bin zu Mittag, etc.

Derartige Presence-Services existieren bereits für das Datenmedium Internet. Die Informationen werden dem Teilnehmer in einer Teilnehmerliste, einer sogenannten Buddy-Liste, visualisiert. Bei diesen Buddy-Listen handelt es sich um eine persönliche Liste einer oder mehrerer selbst gewählter Teilnehmer deren Presence-Status man verfolgen möchte. Sie geben insbesondere eine Information darüber, ob eine ausgewählte Person aktuell "online", also erreichbar ist.

Über die Leistungsmerkmale Abwesenheitstexte und Anrufschutz sind heute schon bei vielen Telekommunikationsanlagen bzw. PBX-Systemen Status-Informationen für jeden Teilnehmer gespeichert. Heute werden diese Informationen den Endgeräten bei einem Anruf zur Verfügung gestellt.

Beispielsweise kann ein Teilnehmer den Standard-Abwesenheitstext "Bin im Urlaub bis 20.6." aktiviert haben.
Wird dieser Teilnehmer dann von einem anderen Teilnehmer angerufen, der an die gleiche TK-Anlage angeschlossen ist, wird dem anrufenden Teilnehmer die Textmeldung übermittelt und im Display des Anrufenden angezeigt.

Aufgabe der vorliegenden Erfindung ist es daher, ein Verfahren zur Bereitstellung von Abwesenheitsinformation in einer TK-Anlage anzugeben, das einem Teilnehmer ermöglicht, über die Ansprechbarkeit weiterer Teilnehmer ständig informiert zu sein und den eigenen Erreichbarkeitsstatus anderen Teilnehmern zur Verfügung zu stellen.

Aus der EP 1 217 849 A1 ist ein Verfahren zur Überprüfung des (Aktivitäts)-Status eines gerufenen Teilnehmers bekannt. Hierbei wird in einem Netz eine Datei eingerichtet, in welcher der Status, damit auch die Abwesenheit, der Teilnehmer einer Gruppe gespeichert ist. Vor einem Aufbau einer Erfindung oder einem Einrichten einer Verbindung wird die Datei hinsichtlich des Status bzw. der Abwesenheit abgefragt und eine Statusinformation an das rufende Endgerät vermittelt.

Aus der US 2002/0078150 A1 ist des weiteren im Verfahren zum Festlegen von unterschiedlichen Profilen für Teilnehmer unterschiedlicher Teams bekannt, wobei mit Hilfe eines Collaboration Services die unterschiedlichen Profile in den jeweiligen Teams aktualisiert werden. In den Profilen wird auch eine Präsenzinformation bzw. eine Abwesenheitsinformation aktuell gehalten und an die Mitglieder des Teams übermittelt.

Diese Aufgabe wird durch ein Verfahren mit den Merkmalen nach Anspruch 1 gelöst.

Eine wesentliche Idee der Erfindung besteht darin, dass an einem ersten Endgerät, das einem ersten Teilnehmer zugeordnet ist, Status-Information (speziell Abwesenheitsinformation) erzeugt und erfasst wird. Diese Information wird anschließend an einen Vermittlungsknoten einer TK-Anlage übermittelt und dort abgespeichert. Anschließend übermittelt der Vermittlungsknoten die Information an ein zweites Endgerät, das einem zweiten Teilnehmer zugeordnet ist, so dass die Abwesenheitsinformation sodann am zweiten Endgerät verfügbar ist. Auf diese Weise hat der zweite Teilnehmer den Status des ersten Teilnehmers ständig parat. Es ist sinnvoll, diese neuen Kommunikationsparadigmen nicht nur mit kommenden IP-Produkten zu integrieren, sondern diese Funktionalität auch in der bestehenden Produktlandschaft zur Verfügung zu stellen (IP-Konvergenz). Dies gewährleistet dem Kunden wiederum, dass sein bislang getätigtes Investment seinen Wert behält (Investment Protection).

Vorteilhaft werden bei dem Erzeugen und Speichern der Abwesenheitsinformation Leistungsmerkmale der Telekommunikationsanlage, die Leistungsmerkmale "Abwesenheitstext" und "Anrufschutz", verwendet. Dadurch kann die Hardware bereits vorhandener Anlagen weiterverwendet werden, die diese bekannten Leistungsmerkmale aufweisen.

Bei einer vorteilhaften Ausführungsform des erfindungsgemäßen Verfahrens sendet das zweite Endgerät an den Vermittlungsknoten eine Anforderungsnachricht. Nach Erhalt dieser Anforderungsnachricht sendet der Vermittlungsknoten an das zweite Endgerät die aktuelle Abwesenheitsinformation über den ersten Teilnehmer. Auf diese Weise kann die am zweiten Endgerät verfügbare Information nach Bedarf aktualisiert werden.

Alternativ sendet in einer weiteren zweckmäßigen Ausführungsform zwar auch das zweite Endgerät an den Vermittlungsknoten die Anforderungsnachricht, aber der Vermittlungsknoten sendet nach Erhalt der Anforderungsnachricht eine aktuelle Abwesenheitsinformation über den ersten Teilnehmer in bestimmten Zeitabständen. Dadurch wird die an dem zweiten Endgerät verfügbare Information regelmäßig aktualisiert und erneuert.

Als weitere Alternative wird von dem zweiten Endgerät an den Vermittlungsknoten ebenfalls eine Anforderungsnachricht gesendet, der Vermittlungsknoten sendet jedoch nach Erhalt der Anforderungsnachricht an das zweite Endgerät jeweils eine aktuelle Abwesenheitsinformation über den ersten Teilnehmer nur nach einer Änderung derselben. Auf diese Weise wird die an dem zweiten Endgerät verfügbare Information nur dann aktualisiert und erneuert, wenn eine Veränderung aufgetreten ist. Bei gleichbleibender Abwesenheitsinformation findet keine Datenübertragung statt, wodurch die Menge der zu übertragenden Daten reduziert werden kann.

In einer weiteren vorteilhaften, für den Nutzer besonders komfortablen Ausführungsform des erfindungsgemäßen Verfahrens wird die Abwesenheitsinformation über den ersten Teilnehmer an dem ersten Endgerät automatisch erfasst. Die Erfassung der Anwesenheit kann in einfacher Weise durch Feststellen erfolgen, ob das Endgerät an- bzw. abgeschaltet ist. Oder es ist unter anderem die Erfassung der Anwesenheit durch einen Sensor, beispielsweise ein Bewegungsmelder am Arbeitsplatz, denkbar. Ferner können die Urlaubsinformationen von der Personalabteilung dem Vermittlungsknoten zur Verfügung gestellt werden.

Zweckmäßigerweise werden die verfügbaren Abwesenheitsinformation auf einer Anzeige des zweiten Endgerätes angezeigt. Dies kann beispielsweise das Display eines Telekommunikations-Endgerätes bzw. Telefon oder ein Monitor eines Computers sein oder die Abwesenheitsinformation kann auch als Sprachmeldung (Text-to-Speach) erfolgen, wenn das zweite Endgerät beispielsweise über kein Display verfügt. Bei der Darstellung eines Telefondisplays mit einer oder zwei Zeilen können alpha-numerische Zeichen und übliche Symbole verwendet werden. Bei der Darstellung auf einem Computermonitor kann die Information mit graphischen Mitteln, kleinen Bildern und dergleichen, ansprechender ausgestaltet werden.

In einer vorteilhaften Ausführungsform des erfindungsgemäßen Verfahrens wird die Abwesenheitsinformation über den ersten Teilnehmer in dem zweiten Endgerät oder in einem Vermittlungsknoten oder in einem anderen geeigneten Gerät gespeichert. Somit steht die Information auch dann weiter zur Verfügung, wenn in der Zwischenzeit auf der Anzeige etwas anderes, beispielsweise die selbstgewählte Telefonnummer eines gewünschten Gesprächspartners, angezeigt wurde.

In einer zweckmäßigen Ausführungsform senden mehrere erste Endgeräte die jeweilige Abwesenheitsinformation an das zweite Endgerät. Dabei ist an dem zweiten Endgerät eine Teilnehmerliste definierbar, die die entsprechenden ersten Teilnehmer umfasst. Dadurch kann der zweite Teilnehmer eine Auswahl anderer Teilnehmer festlegen, deren Abwesenheitsinformation er verfügbar haben möchte. Bevorzugt sendet hierzu das erste Endgerät die Abwesenheitsinformation an mehrere zweite Endgeräte.

Bei einer besonders vorteilhaften Ausführungsform des erfindungsgemäßen Verfahrens wird zusätzlich Abwesenheitsinformation über mindestens einen externen Teilnehmer bereitgestellt. Der externe Teilnehmer ist mit einem ihm zugeordneten Endgerät nicht der Telekommunikationsanlage zugeordnet. Vielmehr ist das externe Endgerät über ein Netz bzw. Datennetz, beispielsweise das Internet, über ein LAN (local area network) oder jedes weitere geeignete Datennetz, mit der Telekommunikationsanlage verbunden. Es ist für Nutzer hochattraktiv, nicht nur den Presence-Status von Teilnehmern am gleichen System zu verfolgen, sondern auch den Presence-Status von externen Teilnehmern zu verfolgen, die über das gesamte Internet weltweit zu ereichen sind und den eigenen Presence-Status, wenn gewünscht, über diesen externen Service zu veröffentlichen.

Eine bevorzugte Ausführungsform des erfindungsgemäßen Verfahrens verwendet eine erste Zuordnungstabelle, um die Abwesenheitsinformation über den externen Teilnehmer aus einem Abwesenheitsinformationsformat des externen Endgerätes in ein Abwesenheitsinformationsformat der TK-Anlage zu transformieren. Ferner wird eine zweite Zuordnungstabelle verwendet, um Abwesenheitsinformation in die entgegengesetze Richtung zu Transformieren, also aus dem Abwesenheitsinformationsformat der Telekommunikationsanlage in ein Abwesenheitsinformationsformat des externen Endgerätes. Hierdurch ist der Austausch der Information über Systemgrenzen, also die Synchronisation der Endgeräte, möglich.

In einer vorteilhaften Ausführungsform des erfindungsgemäßen Verfahrens werden zum Senden der Abwesenheitsinformation zwischen Endgeräten einer PBX und externen Endgeräten Standard-Protokolle, beispielsweise das Session Initiation Protocoll (SIP), verwendet. Dadurch ist der plattform-unabhängige Austausch der Abwesenheitsinformation möglich.

Besonders vorteilhaft ist die Verwendung des erfindungsgemäßen Verfahrens in einer Telekommunikationsanlage, die die Leistungsmerkmale "Abwesenheitstext" und "Anrufschutz" aufweist. Dadurch ist es möglich, aus vorhandenen Leistungsmerkmalen einer traditionellen bzw. bekannten Telekommunikationsanlage, einen Abwesenheitsinformations-Service bzw. einen "Presence Service" zur Verfügung zu stellen, der sowohl IP-Endpunkten wie IP-PC-Clients und IP-Telefonen als auch herkömmlichen Systemtelefonen und zukünftigen Endgeräten und Applikationen zur Verfügung steht.

Weitere Vorteile und Zweckmäßigkeiten ergeben sich aus den Unteransprüchen sowie der nachfolgenden Beschreibung eines bevorzugten Ausführungsbeispiels.

Die nachfolgend vorgestellte Ausführungsform ist am Beispiel eines Kommunikationssystems dargestellt, wobei zunächst das Leistungsmerkmal "Abwesenheitstext" beschrieben wird. In diesem System kann jeder Teilnehmer mit Display einen im System konfigurierten Abwesenheitstext aktivieren.

Wird ein Teilnehmer, der einen solchen Text aktiviert hat, angerufen, so erscheint im Display des Anrufenden der entsprechende Abwesenheitstext. Die Texte können variable Parametern aufweisen, wobei die Parameter (z.B. Uhrzeit) während der Aktivierung eingegeben werden. Für die Eingabe der ergänzenden Zeichen steht der Ziffernblock des Endgerätes zur Verfügung.

Das System verfügt über eine bestimmte Anzahl von Abwesenheitstexten, beispielsweise zehn. Dabei beträgt die maximal zulässige Zeichenlänge des Abwesenheitstextes beispielsweise 24 Zeichen. Zusätzlich besteht die Möglichkeit einen individuellen Text einzugeben und zusenden.

Im folgenden wird das Leistungsmerkmal "Anrufschutz" (DND) diskutiert, bei dem jede Endstelle über eine Prozedur einen Anrufschutz für sich aktivieren kann. Durch dieses Leistungsmerkmal werden ankommende Rufe für diese Endstelle nicht durchgestellt.

Das erfindungsgemäße Verfahren verwendet die beiden vorgestellten Leistungsmerkmale zur Realisierung der Aufgabenstellung. Zunächst wird der "Presence-Service" anhand der Abwesenheitsinformations-Bereitstellung erläutert. Macht man diese Abwesenheitsinformationen nicht nur bei Anruf, sondern ständig verfügbar, kann man diese Presence-Status-Information zum Aufbau eines Presence-Services nutzen. Durch Auswertung der Informationen der Abwesenheitstexte und des Zustands Anrufschutz kann der Client die Presence-Status-Information für seine persönliche "Buddy-Liste" sowohl auswerten als auch den eigenen "Presence-Zustand" setzen. Dieses Auswerten bzw. Setzen des Presence-Status-Information erfolgt über die vorhandenen Leistungsmerkmale Anrufschutz bzw. Abwesenheitstext.

Der Client gibt die Statusinformation sowohl als Icon wieder, beispielsweise "Im Urlaub" durch eine Palme, als auch durch einen Text mit weiterer Information, wenn man beispielsweise die Maus auf einen "Buddy" bewegt, beispielsweise "Bin im Urlaub bis: 20.6.2002".

Die nachfolgende Tabelle gibt die möglichen Zustände und ihre jeweilige Darstellung im PC-Client wieder:

| Status Nummer | Zustand Gegenstelle | Status-Information | Darstellung im Client |
|---|---|---|---|
| 1 | Keine Status-Information verfügbar | Keine | Kein Punkt Farbiger Icon Person |
| 2 | Keine Status-Information gesetzt, Teilnehmer frei | Online, frei | Grüner Punkt, farbiger Icon Person |
| 3 | Keine Status-Information gesetzt, Teilnehmer besetzt | Online, besetzt | Rot, farbiger Icon Person |
| 4 | Keine Status-Information gesetzt, Teilnehmer nicht registriert | Offline | Grauer Punkt Grauer Icon Person |
| 5 | Anrufschutz ein | Online/offline + Status | Gelber/grauer Punkt Farbiger Icon Person z.B. "Bitte nicht stören" wird ange- |
| | | | zeigt, wenn die Maus über Icon geführt wird |
| 6 | Abwesenheitstexte Ein | | |
| 7 | 0) zurück bis: | Online, Offline + Status 0) zurück bis: | Gelber/grauer Punkt Farbiger Icon Uhr Zurück-Zeit wird angezeigt, wenn Maus über Icon geführt wird |
| 8 | 1) Urlaub bis: | Online, Offline 1) Urlaub bis; | Roter/grauer Punkt Farbige Palme Datum wird angezeigt, wenn Maus über Icon geführt wird |
| 9 | 2) Reise bis: | Online, Offline 2) Reise bis: | Gelber/grauer Punkt Farbiger Icon Auto/Zug/Flugzeug Datum wird angezeigt, wenn Maus über Icon geführt wird |
| 10 | 3) abwesend ganztags | Online, Offline 3) abwesend ganztags | Gelber/grauer Punkt Farbiger Icon Person z. B. "Bin morgen wieder da" wird angezeigt, wenn Maus über Icon geführt wird |
| 11 | 4) abwesend mittags | Online, Offline 4) abwesend mittags | Gelber Punkt Farbiger Icon Kaffeetasse "Mache Pause" wird angezeigt, wenn Maus über Icon ge- |
| | | | führt wird |
| 12 | 5) bin nicht erreichbar | Online, Offline 5) bin nicht erreichbar | Roter/grauer Punkt Grauer Icon einer Person z.B. "Bin nicht erreichbar" wird angezeigt, wenn Maus über Icon geführt wird |
| 13 | 6) privat tel. | Online, Offline 6) privat tel. | Gelber/grauer Punkt Farbiger Icon Person Telefonnummer wird angezeigt, wenn Maus über Icon geführt wird |
| 14 | 7) Vertreter | Online, Offline 7) Vertreter | Gelber/grauer Punkt Farbiger Icon Person Telefonnummer und Name des Vertreters wird angezeigt, wenn Maus über Icon geführt wird |
| 15 | 8) zur Zeit | Online, Offline 8) zur Zeit | Gelber/grauer Punkt Farbige Darstellung Person Freier Text wird angezeigt, wenn Maus über Icon geführt wird |
| 16 | 9) bin in Raum: | Online, Offline 9) bin in Raum: | Gelber/grauer Punkt Farbige Darstellung Person Raumnummer/Bezeichnung wird angezeigt, |
| | | | wenn Maus über Icon geführt wird |
| 17 | 10) anderer Text | Online, Offline 10) anderer Text | Grüner Punkt, farbiger Icon Person mit Ausrufezeichen Text wird angezeigt, wenn Maus über Icon geführt wird |

Die Abwesenheitsinformation wird am Endgerät erzeugt. Dabei kann der eigene Zustand einfach über ein Fenster bzw. Menüs konfiguriert werden. Wenn Stati eine weitere Eingabe erfordern, sollte diese optional eingegeben werden können. Nachfolgend ist eine Liste möglicher Zustände, mit ihrer Bezeichnung und einem entsprechenden Eingabefeld dargestellt:

| Menü: Datei/Mein Status | | |
|---|---|---|
| Checkbox: | Statusbezeichnung | Eingabefeld |
| ⊗ | Urlaub: | 30.06.2002 |
| ○ | Zurück bis: | |
| ○ | Dienstreise bis: | |
| ○ | etc. | |

Diese Eingaben muss der Client wiederum nutzen, um das traditionelle Leistungsmerkmal "Anrufschutz" bzw. "Abwesenheitstext" in entsprechender Weise zu setzen. So ist garantiert, dass Tischtelefone mit 2-Zeilen-Display diese Funktionalität ohne Änderung in herkömmlicher Weise nutzen können. Bei zukünftigen Telefonen mit größerem Display können analog zum Client ebensolche "Buddy-Listen" visualisiert auf dem Display dargestellt werden.

Die Presence-Services bieten Schnittstellen für externe Programme, um Presence-Status-Informationen zu setzen und auszutauschen. Zum Teil handelt es sich um proprietäre Schnittstellen, zum Teil werden Standard-Protokolle wie z.B. SIP (Session Initiation Protocoll) verwendet, um Statusinformationen auszutauschen. Diese Schnittstellen muss der PC-Client bzw. das Telefon bedienen. Dies ist z.B. mit dem erwähnten Protokoll SIP möglich.

Über eine Zuordnungstabelle der Abwesenheitsinformation in den jeweiligen Formaten kann eine Synchronisation der Tabellen für jedes Format erfolgen. Die Zuordnung wird am Beispiel von Presence-Status-Informationen einer TK-Anlage und einer Software Messenger für Internetanwendungen erläutert, kann aber analog auch für andere Presence Services und andere TK-Anlagen entsprechend abgewandelt verwendet werden.

Die nachfolgende Tabelle stellt die Synchronisation in der Richtung TK-Anlage zum Messenger dar:

| Status Nummer | Status-Information TK-Anlage | Status Messenger |
|---|---|---|
| 1 | Keine | Als offline Anzeigen |
| 2 | Online, frei | Online |
| 3 | Online, besetzt | Am Telefon |
| 4 | Offline | Als offline Anzeigen |
| 5 | Online/offline + Status Anrufschutz ein | Beschäftigt |
| 6 | | |
| 7 | Online, Offline + Status 0) zurück bis: | Bin gleich zurück |
| 8 | Online, Offline 1) Urlaub bis: | Abwesend |
| 9 | Online, Offline 2) Reise bis | Abwesend |
| 10 | Online, Offline 3) abwesend ganztags | Abwesend |
| 11 | Online, Offline 4) abwesend mittags | Mittagspause |
| 12 | Online, Offline | Abwesend |
| | 5) bin nicht erreichbar | |
| 13 | Online, Offline 6) privat tel. | Online |
| 14 | Online, Offline 7) Vertreter | Abwesend |
| 15 | Online, Offline 8) zur Zeit | Online |
| 16 | Online, Offline 9) bin in Raum: | Online |
| 17 | Online, Offline 10) anderer Text | Online |

Die Gegenrichtung, also die Synchronisation in der Richtung Messenger zur TK-Anlage wird in der folgenden Tabelle dargestellt:

| Status Nummer | Status Presence Messeneger | Status-Information TK-Anlage |
|---|---|---|
| 1 | Als offline Anzeigen | Keine |
| 2 | Online | Online, frei |
| 3 | Am Telefon | Online, besetzt |
| 5 | Beschäftigt | Online/offline + Status Anrufschutz ein |
| 7 | Bin gleich zurück | Online, Offline + Status 0) zurück bis, ohne Zeitangabe |
| 10 | Abwesend | Online, Offline 3) abwesend ganztags |
| 11 | Mittagspause | Online, Offline 4) abwesend mittags |

Wie aus den vorgestellten Tabellen ersichtlich, kann es bei der Synchronisation der Abwesenheitsinformation zwischen zwei unterschiedlichen Informationsformaten zu einen geringen Verlust der Dateninformation kommen. Da der Messenger nur eine geringere Anzahl von Zustandsbezeichnungen zulässt, können auf einem Display eines Endgerätes der TK-Anlage keine verschiedenen Informationen angegeben werden, ob der Teilnehmer im Urlaub, auf einer Dienstreise, ganztags abwesend, nicht erreichbar oder einen Vertreter bestimmt hat. Alle die aufgeführten Zustände werden als ganztags abwesend dargestellt.

Es ist offensichtlich, dass die übermittelte bzw. transformierte Abwesenheitsinformation um so ausführlicher und genauer ist, in Abhängigkeit der Ausführlichkeit der Tabelle mit der geringeren Stati-Anzahl. Ein noch zu entwickelnder allgemeiner Standard für den Austausch dieser Abwesenheitsinformation wird diese derzeitige Einschränkung zukünftig vermeiden.

Sämtliche in den Anmeldungsunterlagen offenbarte Merkmale werden als erfindungswesentlich beansprucht, soweit sie einzeln oder in Kombination gegenüber dem Stand der Technik neu sind.

## Patentansprüche

1. Verfahren zum Bereitstellen von Abwesenheitsinformation in einer Telekommunikationsanlage mit mehreren Teilnehmern mit folgenden Schritten:
- Erzeugen und Erfassen der Abwesenheitsinformation über einen ersten Teilnehmer an einem ersten Endgerät, das dem ersten Teilnehmer zugeordnet ist,
- Senden der Abwesenheitsinformation über den ersten Teilnehmer an einen Vermittlungsknoten der Telekommunikationsanlage und Speichern der Abwesenheitsinformation in dem Vermittlungsknoten,
- Senden der Abwesenheitsinformation über den ersten Teilnehmer an ein zweites Endgerät, das einem zweiten Teilnehmer zugeordnet ist, so dass die Abwesenheitsinformation am zweiten Endgerät ständig verfügbar ist,
**dadurch gekennzeichnet,**
**dass** bei dem Erzeugen und Speichern der Abwesenheitsinformation die Leistungsmerkmale Abwesenheitstext und Anrufschutz der Telekommunikationsanlage verwendet werden.

2. Verfahren nach Anspruch 1,
**dadurch gekennzeichnet, dass**
das zweite Endgerät an den Vermittlungsknoten eine Anforderungsnachricht sendet und der Vermittlungsknoten nach Erhalt der Anforderungsnachricht an das zweite Endgerät die aktuelle Abwesenheitsinformation über den ersten Teilnehmer sendet.

3. Verfahren nach Anspruch 1,
**dadurch gekennzeichnet, dass**
das zweite Endgerät an den Vermittlungsknoten eine Anforderungsnachricht sendet und der Vermittlungsknoten nach Erhalt der Anforderungsnachricht an das zweite Endgerät in bestimmten Zeitabständen die aktuelle Abwesenheitsinformation über den ersten Teilnehmer sendet.

4. Verfahren nach Anspruch 1,
**dadurch gekennzeichnet, dass**
das zweite Endgerät an den Vermittlungsknoten eine Anforderungsnachricht sendet und der Vermittlungsknoten nach Erhalt der Anforderungsnachricht an das zweite Endgerät bei einer Änderung der Abwesenheitsinformation über den ersten Teilnehmer diese sendet.

5. Verfahren nach einem der vorstehenden Ansprüche,
**dadurch gekennzeichnet, dass**
die Abwesenheitsinformation über den ersten Teilnehmer an dem ersten Endgerät automatisch erfasst wird.

6. Verfahren nach einem der vorstehenden Ansprüche,
**dadurch gekennzeichnet, dass**
die gesendete Abwesenheitsinformation auf einer Anzeige des zweiten Endgerätes angezeigt wird.

7. Verfahren nach einem der vorstehenden Ansprüche,
**dadurch gekennzeichnet, dass**
die Abwesenheitsinformation in dem zweiten Endgerät gespeichert wird.

8. Verfahren nach einem der vorstehenden Ansprüche,
**dadurch gekennzeichnet, dass**
mehrere erste Endgeräte jeweilige Abwesenheitsinformation an den Vermittlungsknoten senden und dass an dem zweiten Endgerät eine Teilnehmerliste definierbar ist, die die entsprechenden ersten Teilnehmer umfasst.

9. Verfahren nach einem der vorstehenden Ansprüche,
**dadurch gekennzeichnet, dass**
der Vermittlungsknoten die Abwesenheitsinformation an mehrere zweite Endgeräte sendet.

10. Verfahren nach einem der vorstehenden Ansprüche,
**dadurch gekennzeichnet, dass**
zusätzlich Abwesenheitsinformation über mindestens einen externen Teilnehmer bereit gestellt wird, der nicht der Telekommunikationsanlage zugeordnet ist, sondern der mit einem zugeordneten, externen Endgerät über ein Netz, insbesondere über das Internet, mit der Telekommunikationsanlage verbunden ist.

11. Verfahren nach Anspruch 10,
**dadurch gekennzeichnet, dass**
eine erste Zuordnungstabelle verwendet wird, um die Abwesenheitsinformation über den externen Teilnehmer aus einem Abwesenheitsinformationsformat des externen Endgerätes in ein Abwesenheitsinformationsformat der Telekommunikationsanlage zu transformieren.

12. Verfahren nach Anspruch 10 oder 11,
**dadurch gekennzeichnet, dass**
eine zweite Zuordnungstabelle verwendet wird, um Abwesenheitsinformation aus dem Abwesenheitsinformationsformat der Telekommunikationsanlage in das Abwesenheitsinformationsformat des externen Endgerätes zu transformieren.

13. Verfahren nach einem der Ansprüche 10 bis 12,
**dadurch gekennzeichnet, dass**
zum Senden der Abwesenheitsinformation zwischen Endgeräten der Telekommunikationsanlage und dem externen Endgerät Standard-Protokolle, insbesondere das Session Initiation Protokoll (SIP), verwendet werden.

14. Verwendung einer Telekommunikationsanlage, die die Leistungsmerkmale AbweSenheitstext und Anrufschutz umfasst, zur Bereitstellung von Abwesenheitsinformation mit einem Verfahren nach einem der Ansprüche 1 bis 13.

## Revendications

1. Procédé pour fournir une information d'absence dans une installation de télécommunication ayant plusieurs abonnés, comprenant les étapes suivantes :
- création et saisie de l'information d'absence concernant un premier abonné sur un premier terminal qui est affecté au premier abonné,
- émission de l'information d'absence concernant le premier abonné à un noeud de commutation de l'installation de télécommunication et mémorisation de l'information d'absence dans le noeud de commutation,
- émission de l'information d'absence concernant le premier abonné à un deuxième terminal qui est affecté à un deuxième abonné, de sorte que l'information d'absence est disponible en permanence sur le deuxième terminal,
**caractérisé en ce**
**que** lors de la création et de la mémorisation de l'information d'absence, les services texte d'absence et protection d'appel de l'installation de télécommunication sont utilisés.

2. Procédé selon la revendication 1,
**caractérisé en ce**
**que** le deuxième terminal émet au noeud de commutation un message de demande et en ce que le noeud de commutation, après réception du message de demande, émet au deuxième terminal l'information d'absence actuelle concernant le premier abonné.

3. Procédé selon la revendication 1,
**caractérisé en ce**
**que** le deuxième terminal émet au noeud de commutation un message de demande et en ce que le noeud de commutation, après réception du message de demande, émet au deuxième terminal, à intervalles de temps déterminés, l'information d'absence actuelle concernant le premier abonné.

4. Procédé selon la revendication 1,
**caractérisé en ce**
**que** le deuxième terminal émet au noeud de commutation un message de demande et en ce que le noeud de commutation, après réception du message de demande, émet, en cas d'une modification de l'information d'absence concernant le premier abonné, celui-ci au deuxième terminal.

5. Procédé selon l'une quelconque des revendications précédentes,
**caractérisé en ce**
**que** l'information d'absence concernant le premier abonné est saisie automatiquement sur le premier terminal.

6. Procédé selon l'une quelconque des revendications précédentes,
**caractérisé en ce**
**que** l'information d'absence émise est visualisée sur un afficheur du deuxième terminal.

7. Procédé selon l'une quelconque des revendications précédentes,
**caractérisé en ce**
**que** l'information d'absence est mémorisée dans le deuxième terminal.

8. Procédé selon l'une quelconque des revendications précédentes,
**caractérisé en ce**
**que** plusieurs premiers terminaux émettent des informations d'absence respectives au noeud de commutation et en ce qu'une liste d'abonnés est définissable sur le deuxième terminal, cette liste comprenant les premiers abonnés correspondants.

9. Procédé selon l'une quelconque des revendications précédentes,
**caractérisé en ce**
**que** le noeud de commutation émet l'information d'absence à plusieurs deuxièmes terminaux.

10. Procédé selon l'une quelconque des revendications précédentes,
**caractérisé en ce**
**qu'**en outre, une information d'absence concernant au moins un abonné externe est fournie, qui n'est pas affecté à l'installation de télécommunication mais qui est raccordé à l'installation de télécommunication au moyen d'un terminal externe affecté via un réseau, en particulier via l'Internet.

11. Procédé selon la revendication 10,
**caractérisé en ce**
**qu'**un premier tableau d'affectations est utilisé afin de transformer l'information d'absence concernant l'abonné externe, à partir d'un format d'information d'absence du terminal externe, en un format d'information d'absence de l'installation de télécommunication.

12. Procédé selon la revendication 10 ou 11,
**caractérisé en ce**
**qu'**un deuxième tableau d'affectations est utilisé afin de transformer l'information d'absence, à partir du format d'information d'absence de l'installation de télécommunication, en format d'information d'absence du terminal externe.

13. Procédé selon l'une quelconque des revendications 10 à 12,
**caractérisé en ce que**
des protocoles standard, en particulier le Session Initiation Protocol (SIP), sont utilisés pour émettre l'information d'absence entre les terminaux de l'installation de télécommunication et le terminal externe.

14. Utilisation d'une installation de télécommunication qui comprend les services texte d'absence et protection d'appel pour fournir une information d'absence au moyen d'un procédé selon l'une quelconque des revendications 1 à 13.

## Claims

1. A method for providing absence information in a telecommunication system having a plurality of subscribers, said method comprising the following steps:
- producing and capturing the absence information about a first subscriber at a first terminal which is assigned to the first subscriber,
- sending the absence information about the first subscriber to a switching node of the telecommunication system and storing the absence information in the switching node,
- sending the absence information about the first subscriber to a second terminal which is assigned to a second subscriber, such that the absence information is continuously available at the second terminal,
**characterised in that**
the service features Absence Text and Station Guarding of the telecommunication system are used when producing and storing the absence information.

2. The method according to claim 1,
**characterised in that**
the second terminal sends a request message to the switching node and, after receiving the request message, the switching node sends the current absence information about the first subscriber to the second terminal.

3. The method according to claim 1,
**characterised in that**
the second terminal sends a request message to the switching node and, after receiving the request message, the switching node sends the current absence information about the first subscriber to the second terminal at specified time intervals.

4. The method according to claim 1,
**characterised in that**
the second terminal sends a request message to the switching node and, after receiving the request message, the switching node sends absence information about the first subscriber to the second terminal if said absence information has changed.

5. The method according to one of the preceding claims,
**characterised in that**
the absence information about the first subscriber is automatically captured at the first terminal.

6. The method according to one of the preceding claims,
**characterised in that**
the absence information which has been sent is displayed on a display of the second terminal.

7. The method according to one of the preceding claims,
**characterised in that**
the absence information is stored in the second terminal.

8. The method according to one of the preceding claims,
**characterised in that**
a plurality of first terminals send relevant absence information to the switching node, and that a subscriber list which includes the corresponding first subscribers can be defined at the second terminal.

9. The method according to one of the preceding claims,
**characterised in that**
the switching node sends the absence information to a plurality of second terminals.

10. The method according to one of the preceding claims,
**characterised in that**
absence information about at least one external subscriber is additionally provided, said external subscriber not being assigned to the telecommunication system, but having an assigned external terminal and being connected to the telecommunication system via a network, in particular via the internet.

11. The method according to claim 10,
**characterised in that**
a first assignment table is used in order to transform the absence information about the external subscriber from an absence information format of the external terminal into an absence information format of the telecommunication system.

12. The method according to claim 10 or 11,
**characterised in that**
a second assignment table is used in order to transform absence information from the absence information format of the telecommunication system into the absence information format of the external terminal.

13. The method according to one of the claims 10 to 12,
**characterised in that**
standard protocols, in particular the Session Initiation Protocol (SIP), are used for sending the absence information between terminals of the telecommunication system and the external terminal.

14. A use of a telecommunication system, which includes the Absence Text and Station Guarding service features, for providing absence information using a method as claimed in one of the claims 1 to 13.
